# EUROPEAN PATENT APPLICATION

(11) **EP 1 819 104 A1**
(43) Date of publication of application: **15.08.2007**
(21) Application number: 06019928.8
(22) Date of filing: 22.09.2006
(51) Int. Cl.: H04L 12/56, H04L 12/28

(54) **Method and system for a processor that handles a plurality of wireless access communication protocols**

(30) Priority: 14.02.2006 US 354704
(71) Applicant: Broadcom Corporation, Irvine, CA 92617 (US)
(72) Inventor: Hayek, Claude, 92648 Huntington Beach, CA (US); Madar, III, Lawrence J., 94122 San Francisco, CA (US); Sollenberger, Nelson, 07727 Farmingdale, NJ (US); Hayem, Frederic C., 92130 San Diego, CA (US); Rakshani, Vafa, 92657 Newport Coast, CA (US)
(74) Representative: Jehle, Volker Armin

(57) **Abstract**

Certain aspects of a method and system for handling signals in a communication system are disclosed. Aspects of one method may include processing, within a single chip, any one of a plurality of wireless access communication protocols by any one of a plurality of on-chip baseband processors. None of the on-chip baseband processors is a dedicated processor that is configured to handle only a single wireless access communication protocol. The plurality of wireless access communication protocols may comprise WCDMA, HSDPA, GSM, GPRS, and EDGE. Any one of the plurality of on-chip baseband processors may be configured to process any one of the plurality of wireless access communication protocols.

## Description

### CROSS-REFERENCE TO RELATED APPLICATIONS/INCORPORATION BY REFERENCE

This application makes reference to:
United States Application Serial No. 11/141,478 (Attorney Docket No. BP 4630) filed on May 31, 2005;
United States Application Serial No. 11/140,805 (Attorney Docket No. BP 4631) filed on May 31, 2005;
United States Application Serial No. 11/142,213 (Attorney Docket No. BP 4632) filed on June 1, 2005;
United States Application Serial No. __________ (Attorney Docket No. 16879US01) filed on even date herewith;
United States Application Serial No. __________ (Attorney Docket No. 17050US01) filed on even date herewith;
United States Application Serial No. __________ (Attorney Docket No. 17142US01) filed on even date herewith;
United States Application Serial No. __________ (Attorney Docket No. 17147US01) filed on even date herewith;
United States Application Serial No. __________ (Attorney Docket No. 17261US01) filed on even date herewith;
United States Application Serial No. __________ (Attorney Docket No. 17262US01) filed on even date herewith;
United States Application Serial No. __________ (Attorney Docket No. 17263US01) filed on even date herewith;
United States Application Serial No. __________ (Attorney Docket No. 17264US01) filed on even date herewith;
United States Application Serial No. __________ (Attorney Docket No. 17265US01) filed on even date herewith;
United States Application Serial No. __________ (Attorney Docket No. 17266US01) filed on even date herewith;
United States Application Serial No. __________ (Attorney Docket No. 17267US01) filed on even date herewith;
United States Application Serial No. __________ (Attorney Docket No. 17268US01) filed on even date herewith;
United States Application Serial No. __________ (Attorney Docket No. 17269US01) filed on even date herewith; and
United States Application Serial No. __________ (Attorney Docket No. 17273US01) filed on even date herewith.

Each of the above stated applications is hereby incorporated herein by reference in its entirety.

### FIELD OF THE INVENTION

Certain embodiments of the invention relate to high-speed wireless communication. More specifically, certain embodiments of the invention relate to a method and system for a processor that handles a plurality of wireless access communication protocols.

### BACKGROUND OF THE INVENTION

The Universal Mobile Telecommunications System (UMTS) in its third generation (3G) is intended to provide a wide range of services including telephony, paging, messaging, Internet and broadband data. The International Telecommunication Union (ITU) started the process of defining the standard for third generation systems, referred to as International Mobile Telecommunications 2000 (IMT-2000). In Europe, European Telecommunications Standards Institute (ETSI) was responsible for the UMTS standardization process. In 1998, the Third Generation Partnership Project (3GPP) was formed to continue the technical specification work. The 3GPP has five main UMTS standardization areas: radio access network, core network, terminals, services and system aspects and GSM EDGE radio access network (GERAN).

The 3G Radio Access Technology (UTRAN) is based on the wideband code-division multiple-access (WCDMA) technology. The 3G/UMTS has been specified as an integrated solution for mobile voice and data with wide area coverage. The 3G/UMTS in its initial phase offers theoretical bit rates of up to 384 kbps in high mobility situations, rising as high as 2 Mbps in stationary/nomadic user environments and has been universally standardized via the Third Generation Partnership Project (www.3gpp.org) by using globally harmonized spectrum in paired and unpaired bands.

The 3G/UMTS networks using WCDMA technology are operating commercially worldwide in Asia, Europe, US and Japan. It offers mobile operators significant capacity and broadband capabilities to support greater numbers of voice and data customers, especially in urban centers with higher data rates. The symmetry between uplink and downlink data rates when using paired frequency division duplex (FDD) spectrum indicates that 3G/UMTS is ideally suited for applications such as real-time video telephony in contrast with other technologies such as asymmetric digital subscriber line (ADSL), where there is a pronounced asymmetry between uplink and downlink throughput rates.

The throughput speeds of the WCDMA Radio Access Network (RAN) may be further increased in the future. High speed downlink packet access (HSDPA) and high-speed uplink packet access (HSUPA) technologies are already standardized and are undergoing network trials with operators in the Far East and North America. These technologies may play an instrumental role in positioning 3G/UMTS as a key enabler for true 'mobile broadband' by promising theoretical downlink speeds as high as 14.4 Mbps and 5.8 Mbps uplink, for example. The 3G/UMTS will offer enterprise customers and consumers all the benefits of broadband connectivity whilst on the move by offering data transmission speeds of the same order of magnitude as today's Ethernet-based networks that are an ubiquitous feature of the fixed-line environment. HSDPA implementations may include adaptive modulation and coding (AMC), multiple-input multiple-output (MIMO), hybrid automatic request (HARQ), fast cell search, and advanced receiver design.

The GPRS and EDGE technologies may be utilized for enhancing the data throughput of present second generation (2G) systems such as GSM. The GSM technology may support data rates of up to 14.4 kilobits per second (Kbps), while the GPRS technology, may support data rates of up to 115 Kbps by allowing up to 8 data time slots per time division multiple access (TDMA) frame. The GSM technology, by contrast, may allow one data time slot per TDMA frame. The EDGE technology, may support data rates of up to 384 Kbps. The EDGE technology may utilizes 8 phase shift keying (8-PSK) modulation for providing higher data rates than those that may be achieved by GPRS technology. The GPRS and EDGE technologies may be referred to as "2.5G" technologies.

The UMTS technology, with theoretical data rates as high as 2 Mbps, is an adaptation of the WCDMA 3G system by GSM. One reason for the high data rates that may be achieved by UMTS technology stems from the 5MHz WCDMA channel bandwidths versus the 200 KHz GSM channel bandwidths. The HSDPA technology is an Internet protocol (IP) based service, oriented for data communications, which adapts WCDMA to support data transfer rates on the order of 10 megabits per second (Mbits/s). Developed by the 3GPP group, the HSDPA technology achieves higher data rates through a plurality of methods. For example, many transmission decisions may be made at the base station level, which is much closer to the user equipment as opposed to being made at a mobile switching center or office. These may include decisions about the scheduling of data to be transmitted, when data is to be retransmitted, and assessments about the quality of the transmission channel. The HSDPA technology may also utilize variable coding rates. The HSDPA technology may also support 16-level quadrature amplitude modulation (16-QAM) over a high-speed downlink shared channel (HS-DSCH), which permits a plurality of users to share an air interface channel.

Given the nature of wireless communication, transmitted packets may be lost or may not be received in a manner in which they can be adequately demodulated and/or decoded. Accordingly, retransmission of information may be required to ensure reliable communication over a wireless link. Although various mechanisms are utilized for retransmission, some require significant processing overhead, which may not be suitable for mobile communication devices that have fairly limited processing power and power constraints.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for a processor that handles a plurality of wireless access communication protocols, substantially as shown in and/or described in connection with at least one of the figures, as set forth more completely in the claims.

According to an aspect of the invention, a method for handling communication signals is provided, the method comprising:
processing, within a single chip, any one of a plurality of wireless access communication protocols by any one of a plurality of on-chip baseband processors, wherein each of said plurality of on-chip baseband processors is not dedicated to process a particular one of said plurality of wireless access communication protocols.

Advantageously, said plurality of wireless access communication protocols comprise GSM, GPRS, EDGE, WCDMA and HSDPA.

Advantageously, the method further comprises configuring said any one of said plurality of on-chip baseband processors to process said any one of said plurality of wireless access communication protocols.

Advantageously, the method further comprises coupling said any one of said plurality of on-chip baseband processors to process said any one of said plurality of wireless access communication protocols.

Advantageously, the method further comprises accessing any one of a plurality of peripherals by said any one of said plurality of on-chip baseband processors.

Advantageously, said accessing occurs via at least a high speed bus communicatively coupled to said any one of said plurality of on-chip baseband processors.

Advantageously, said accessing occurs via at least a peripheral bus communicatively coupled to said any one of said plurality of on-chip baseband processors.

Advantageously, the method further comprises arbitrating access to said plurality of peripherals by said any one of said plurality of on-chip baseband processors.

Advantageously, the method further comprises processing multimedia data within said single chip.

Advantageously, said multimedia data is received via one of said plurality of wireless access communication protocols.

According to an aspect of the invention, a machine-readable storage is provided having stored thereon, a computer program having at least one code section for handling communication signals, the at least one code section being executable by a machine for causing the machine to perform steps comprising: processing, within a single chip, any one of a plurality of wireless access communication protocols by any one of a plurality of on-chip baseband processors, wherein each of said plurality of on-chip baseband processors is not dedicated to process a particular one of said plurality of wireless access communication protocols.

Advantageously, the said plurality of wireless access communication protocols comprise GSM, EDGE, GPRS, WCDMA and HSDPA.

Advantageously, the machine-readable storage further comprises code for configuring said any one of said plurality of on-chip baseband processors to process said any one of said plurality of wireless access communication protocols.

Advantageously, the machine-readable storage further comprises code for coupling said any one of said plurality of on-chip baseband processors to process said any one of said plurality of wireless access communication protocols.

Advantageously, the machine-readable storage further comprises code for accessing any one of a plurality of peripherals by said any one of said plurality of on-chip baseband processors.

Advantageously, said accessing occurs via at least a high speed bus communicatively coupled to said any one of said plurality of on-chip baseband processors.

Advantageously, said accessing occurs via at least a peripheral bus communicatively coupled to said any one of said plurality of on-chip baseband processors.

Advantageously, the machine-readable storage further comprises arbitrating access to said plurality of peripherals by said any one of said plurality of on-chip baseband processors.

Advantageously, the machine-readable storage further comprises code for processing multimedia data within said single chip.

Advantageously, said multimedia data is received via one of said plurality of wireless access communication protocols.

According to an aspect of the invention, a system for handling communication signals is provided, the system comprising:
within a single chip, circuitry that enables processing of any one of a plurality of wireless access communication protocols by any one of a plurality of on-chip baseband processors, wherein each of said plurality of on-chip baseband processors is not dedicated to process a particular one of said plurality of wireless access communication protocols.

Advantageously, said plurality of wireless access communication protocols comprise GSM, GPRS, EDGE, WCDMA and HSDPA.

Advantageously, the system further comprises circuitry that enables configuring of said any one of said plurality of on-chip baseband processors to process said any one of said plurality of wireless access communication protocols.

Advantageously, the system further comprises circuitry that enables coupling of said any one of said plurality of on-chip baseband processors to process said any one of said plurality of wireless access communication protocols.

Advantageously, the system further comprises circuitry that enables accessing of a plurality of peripherals by said any one of said plurality of on-chip baseband processors.

Advantageously, said accessing occurs via at least a high speed bus communicatively coupled to said any one of said plurality of on-chip baseband processors.

Advantageously, said accessing occurs via at least a peripheral bus communicatively coupled to said any one of said plurality of on-chip baseband processors.

Advantageously, the system further comprises circuitry that enables arbitration of access to said plurality of peripherals by said any one of said plurality of on-chip baseband processors.

Advantageously, the system further comprises circuitry that enables processing of multimedia data within said single chip.

Advantageously, said multimedia data is received via one of said plurality of wireless access communication protocols.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1A is a block diagram of an exemplary RF receiver system, which may be utilized in connection with an embodiment of the invention.

FIG. 1B is an exemplary block diagram that illustrates handling of a plurality of wireless protocols, in accordance with an embodiment of the invention.

FIG. 2 is a diagram of an exemplary baseband processor chip coupled to a plurality of RF interfaces, in accordance with an embodiment of the invention.

FIG. 3 is an exemplary block diagram of low speed peripherals, in accordance with an embodiment of the invention.

FIG. 4 is an exemplary block diagram of high-speed peripherals, in accordance with an embodiment of the invention.

FIG. 5 is an exemplary block diagram of high-speed master peripherals, in accordance with an embodiment of the invention.

FIG. 6 is an exemplary block diagram that illustrates handling of a plurality of wireless protocols, in accordance with an embodiment of the invention.

### DETAILED DESCRIPTION OF THE INVENTION

Certain aspects of a method and system for handling signals in a communication system are disclosed. Aspects of one method may include processing, within a single chip, any one of a plurality of wireless access communication protocols by any one of a plurality of on-chip baseband processors. In this regard, none of the on-chip baseband processors is dedicated to handle a specific wireless access communication protocol. Accordingly, any processor may be dynamically allocated to process any wireless access communication protocol. The plurality of wireless access communication protocols may comprise WCDMA, HSDPA, GSM, GPRS, and EDGE. Any one of the plurality of on-chip baseband processors may be configured to process any one of the plurality of wireless access communication protocols.

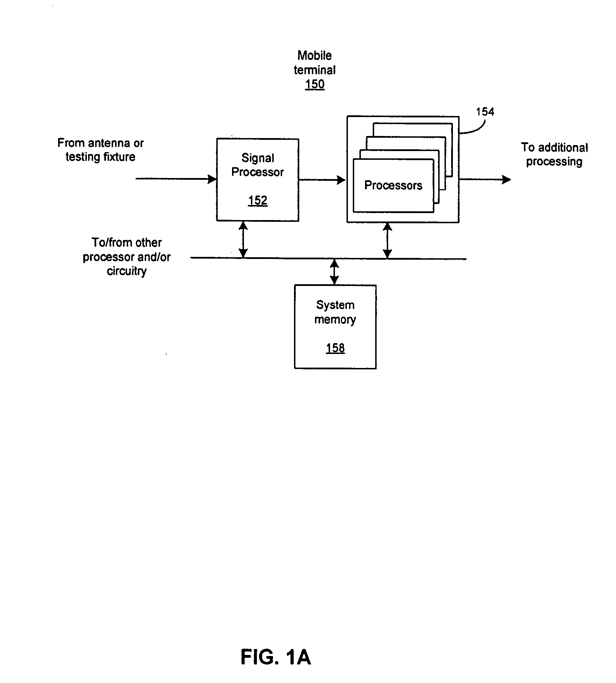

FIG. 1A is a block diagram of an exemplary RF receiver system, which may be utilized in connection with an embodiment of the invention. Referring to FIG. 1A, there may be shown a portion of a mobile terminal 150 that may comprise a signal processor block 152, a baseband processor block 154, and a system memory 158. The signal processor block 152 may comprise suitable logic, circuitry, and/or code that may enable receiving RF signals. The signal processor block 152 may be coupled to an external antenna for signal reception. The signal processor block 152 may demodulate a received signal before further processing. Moreover, the signal processor block 152 may comprise other functions, for example, filtering the received signal, amplifying the received signal, and/or downconverting the received signal to an analog baseband signal. The signal processor block 152 may also digitize the analog baseband signal to a digital baseband signal, and digitally process the digital baseband signal, for example, to filter the digital baseband signal.

The baseband processor block 154 may comprise suitable logic, circuitry, and/or code that may enable processing the digital baseband signals communicated by the signal processor block 152. The baseband processor block 154 may comprise a plurality of baseband processors that may enable controlling the operations of the signal processor block 152. For example, the baseband processor 154 may be utilized to update and/or modify programmable parameters and/or values in a plurality of components, devices, and/or processing elements that may be in the signal processor block 152. For example, there may be programmable gain amplifiers in the signal processor block 152.

The baseband processor 154 may also comprise direct memory access (DMA) circuitry that may enable storing data directly from the baseband processor 154 to the system memory 158. FIG. 1A may be one exemplary architecture for a portion of the mobile terminal 150. Other architectures may also be used in connection with an embodiment of the invention.

The baseband processor 154 may determine the mode of operation of the signal processor block 152. For example, the baseband processor 154 may select a specific frequency for a local oscillator, or a specific gain for a variable gain amplifier. Moreover, the specific frequency selected and/or parameters needed to calculate the specific frequency, and/or the specific gain value and/or the parameters needed to calculate the specific gain, may be stored in the system memory 158 via the baseband processor 154. This information stored in system memory 158 may be transferred to the signal processor block 152 from the system memory 158 via the baseband processor 154. The system memory 158 may comprise suitable logic, circuitry, and/or code that may be adapted for storing a plurality of control and/or data information, including parameters needed to calculate frequencies and/or gain, and/or the frequency value and/or gain value.

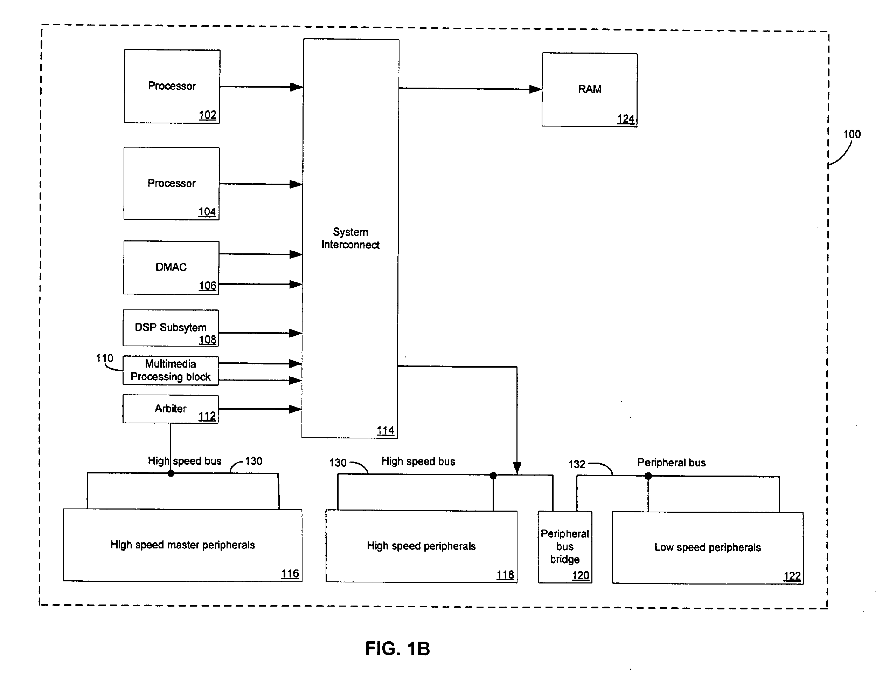

FIG. 1 B is an exemplary block diagram that illustrates handling of a plurality of wireless protocols, in accordance with an embodiment of the invention. Referring to FIG. 1B, there is shown a chip 100. The chip 100 comprises a plurality of baseband processors, processor 102, processor 104, a direct memory access controller (DMAC) 106, a DSP subsystem 108, a multimedia processing block 110, an arbiter 112, a system interconnect 114, a high-speed master peripherals block 116, a high-speed peripherals block 118, a peripheral bus bridge 120, a low speed peripherals block 122, a random access memory (RAM) block 124, a high-speed bus 130 and a peripheral bus 132.

The baseband processors, processor 102 and processor 104 may comprise suitable logic, circuitry and/or code that may be enabled to control the plurality of high-speed peripherals and the plurality of low speed peripherals. The baseband processors 102 and 104 may enable conversion of RF signals to baseband and communicate the baseband processed signals to the plurality of peripherals via the system interconnect 114. Processor 102 may be an ARM 11 processor, for example, or other suitable type of processor. Processor 104 may be an ARM 9 processor, for example, or other suitable type of processor. The processors, 102 and 104 may be integrated as two processor cores within a single chip.

The DMAC 106 may comprise suitable logic, circuitry and/or code that may enable transferring of data between memory and peripheral devices. The DMAC 106 may be enabled to access the baseband processors 102 and 104 address and data buses. The DMAC 106 may be enabled to suspend the processor 102 or processor 104 and transfer one byte by stealing a cycle, for example. The DMAC 106 may be enabled to suspend the processor 102 or processor 104 and transfer many bytes by burst transfer, for example.

The DSP subsystem 108 may comprise an expandable array of compute environments and high-speed I/O ports interconnected using a switched interconnect fabric. The multimedia processing block 110 may comprise suitable logic, circuitry and/or code that may enable compression and decompression of audio and video data streams. The multimedia processing block 110 may be enabled to reduce the size of digital audio samples and video frames in order to speed up transmission and save storage space.

The arbiter 112 may comprise suitable logic, circuitry and/or code that may enable bus arbitration among multiple masters in the high-speed master peripherals block 116 on the high-speed bus 130. A plurality of bus masters may reside on the high-speed bus 130. A pair of request and grant signals may be dedicated to each bus master, for example. The arbiter 112 may enable implementation of either a rotating priority or a fixed priority scheme, for example. In a rotating priority scheme, the requestor that is most recently granted the high-speed bus 120 may receive the lowest priority, while the requestor position next to it may receive the highest priority. The remaining requestors may receive subsequently lower priorities based on their positions.

The system interconnect 114 may comprise a cross bar switch, for example, that may enable coupling each of the baseband processors, processor 102 and processor 104 to a plurality of peripherals, for example, the high-speed master peripherals block 130 and the high-speed peripherals block 118 via the high-speed bus 130 and the low speed peripherals block 122 via the peripheral bus 132. The system interconnect 114 may also comprise a matrix switched interconnect. The system interconnect 114 may be programmed to configure any one of the plurality of on-chip baseband processors, 102 and 104 to process any one of the plurality of wireless access communication protocols. The system interconnect 114 may enable coupling of any one of the plurality of on-chip baseband processors, 102 and 104 to process any one of the plurality of wireless access communication protocols. The system interconnect 114 may enable accessing of a plurality of peripherals, for example, the high speed master peripherals 116, the high speed peripherals 118, and the low speed peripherals 122 by any one of the plurality of on-chip baseband processors, 102 and 104.

The RAM block 124 may comprise a scratch RAM and a memory controller. The memory controller may be enabled to control the scratch RAM and generate the necessary signals to control the reading and writing of information from and to the memory.

The peripheral bus bridge 120 may comprise suitable logic, circuitry and/or code that may provide an interface between the high-speed bus 130 domain and the low power peripheral bus 132 domain. The peripheral bus bridge 120 may appear as a slave on the high-speed bus 130 but may appear as a master on the peripheral bus 132. The read and write transfers on the high-speed bus 130 may be converted into corresponding transfers on the peripheral bus 132.

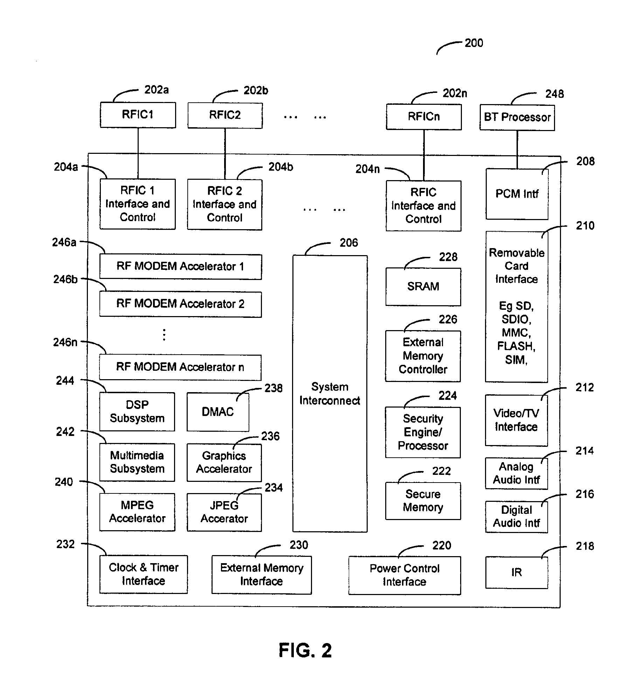

FIG. 2 is a diagram of an exemplary baseband processor chip coupled to a plurality of RF interfaces, in accordance with an embodiment of the invention. Referring to FIG. 2 there is shown a baseband processor chip 200, a plurality of RFICs, namely RFIC1 202a, RFIC2 202b, ..., RFICn 202n, and a Bluetooth radio 248. The baseband processor chip 200 may comprise a plurality of RFIC interface and control blocks, namely, RFIC1 interface and control block 204a, RFIC2 interface and control block 204b, ..., RFICn interface and control block 204n, a system interconnect block 206 and a plurality of RF modem accelerator, namely, RF modem accelerator 1, RF modem accelerator 2, ..., RF modem accelerator n. The baseband processor chip 200 may further comprise a JPEG accelerator 234, graphic accelerator 236, direct memory access controller (DMAC) 238, MPEG accelerator 240, multimedia subsystem 242, and DSP subsystem block 244. The baseband processor chip 200 may also comprise power control interface 220, secure memory 222, security engine/processor 224, external memory controller 226, SRAM 228, external memory interface 230 and clock and timer interface block 232.

The baseband processor chip 200 may further comprise PCM interface 208, removable card interface 210, video/TV interface 212, analog audio interface 214, digital audio interface 216, and infra-red (IR) interface 218. The system interconnect block 206 may comprise circuitry that may be controlled by any one of the accelerators or on-chip devices so that internal devices within the baseband processor chip 200 may be communicatively coupled to other on-chip or off-chip devices. In one exemplary embodiment of the invention, the baseband processor chip 200 may be integrated into a handheld communication device such as a cell phone, a smart phone, and/or a PDA.

The RFIC interface and control blocks 204a, 204b, ..., 204n may comprise suitable logic, circuitry and/or code that enables controlling of external RFICs that may be coupled to the baseband processor chip 200. In one embodiment of the invention, there may be a one-to-one mapping of the RFICs 202a, 202b, ..., 202c to the RFIC interface and control blocks. 204a, 204b, ..., 204c Notwithstanding, the invention my not be so limited and in other embodiments of the invention, at least one RFIC interface and control block may control one or more RFICs. The RFIC interface and control blocks 204a, 204b, ..., 204n may be configured to process any one or more of a plurality of wireless access communication protocols such as WCDMA, HSDPA, GSM, EDGE, or GPRS. The RFIC interface and control blocks 204a, 204b, ..., 204n may be also have the capability to access any of a plurality of processors or devices with the baseband processor chip 200 via the system interconnect block 206.

The RF modem accelerator 1, RF modem accelerator 2, ..., RF modem accelerator n, may comprise suitable logic, circuitry and/or code that may enable acceleration of RF modulation and/or demodulation processing. In one embodiment of the invention, there may be a one-to-one mapping of the RFIC interface and control blocks 204a, 204b, ..., 204n to the RF modem accelerators 246a, 246b, ..., 246n. Notwithstanding, the invention my not be so limited and in other embodiments of the invention, at least one RF modem accelerator may be mapped to one or more RFIC interface and control blocks. The RF modem accelerators 246a, 246b, ..., 246n may be configured to process any one or more of a plurality of wireless access communication protocols such as WCDMA, HSDPA, GSM, EDGE, or GPRS. The RF modem accelerators 246a, 246b, ..., 246n may be also have the capability to access any of a plurality of processors or devices with the baseband processor chip 200 via the system interconnect block 206.

The JPEG accelerator 234 and the MPEG accelerator 240 may comprise suitable logic, circuitry and/or code that may provide accelerated processing by enabling pipelined processing of video data within a single chip. The pipelined processing may further comprise decoding of a block of video data while simultaneously inverse transforming a previously decoded block of video data. United States Application Serial No. __________ (Attorney Docket No. 17262US01) filed on even date herewith, provides a detailed description of a method and system for pipelined processing in an integrated embedded image and video accelerator, and is hereby incorporated by reference in its entirety. United States Application Serial No. __________ (Attorney Docket No. 17263US01) filed on even date herewith, provides a detailed description of a method and system for programmable breakpoints in an integrated embedded image and video accelerator, and is hereby incorporated by reference in its entirety. The graphics accelerator 236 may comprise suitable logic, circuitry and/or code that may enable acceleration of graphics processing by the on-chip base band processor 200. In this regard, graphics processing may be offloaded from a host processor to the baseband processing chip.

The DMA controller 238 may comprise suitable logic, and/or circuitry that may be utilized to facilitate direct memory access to internal and/or external memory. For example, the DMA controller may enable any one or more of the RF modem accelerators to access the internal SRAM and/or external memory that may be coupled to the external memory interface 230.

The DSP subsystem 244 may comprise an expandable array of compute environments and high-speed I/O ports interconnected using a switched interconnect fabric. The multimedia processing block 242 may comprise suitable logic, circuitry and/or code that may enable compression and decompression of audio and video data streams. The multimedia processing 242 may be enabled to reduce the size of digital audio samples and video frames in order to speed up transmission and save storage space. The multimedia subsystem 242 may enable the processing of audio, video and/or images by the baseband processor 200.

The PCM interface 238 may comprise suitable logic, circuitry and/or code that may be utilized to interface with external devices. In one embodiment of the invention, a Bluetooth radio 240 may be coupled to the PCM interface 208. The removable card interface 210 may comprise suitable logic, circuitry and/or code that may be utilized to handle at least one of a plurality of removable media cards such as SD, SDIO, MMC, flash, and SIM.

The video/TV interface 212 may comprise suitable logic, circuitry and/or code that may handle various analog and/or digital display output formats. For example, video/TV interface 212 may handle LCDs, or generate TV out signals. The IR interface 218 may comprise suitable logic, circuitry and/or code that may be adapted to handle infra-red communication. In one embodiment of the invention, the IR interface 218 may be an high-speed IR interface.

The analog audio interface 214 may comprise suitable logic, circuitry and/or code that may be utilized to handle output and/or input analog signals such as signals for speakers, and/or microphones. The digital audio interface 216 may comprise suitable logic, circuitry and/or code that may handle digital audio. For example, the digital audio interface 216 may be utilized to generate signals that may be utilized to drive speakers in monaural and/or stereo format. The power control interface 220 may comprise suitable logic, circuitry and/or code that may control power within the baseband processor chip 200. For example, the power control block may interface with an off-chip power management unit, which may control battery function such as charging, vibration alert, backlighting and/or other functions.

The secure memory 222 may comprise suitable logic, circuitry and/or code that may provide secure control of certain functions within the baseband processor chip 200. In one exemplary embodiment of the invention, the secure memory 222 may comprise a one-time programmable (OTP) memory. The security engine/processor 224 may comprise suitable logic, circuitry and/or code that may provide secure processing of information within the baseband processor chip 200. For example, the security engine/processor may control access to any of the devices that may be located within the baseband processor chip 200.

The external memory controller 226 may comprise suitable logic, circuitry and/or code that may be utilized to control the external memory interface 230. The external memory interface 230 may comprise suitable logic, circuitry and/or code that may be utilized for interface to off-chip devices such as RAM, and/or flash memory. In various exemplary embodiments of the invention, off-chip RAM may comprise SRAM, and/or SDRAM, and off-chip flash may comprise NAND flash or NOR flash.

The SRAM block 228 may comprise on-chip memory that may be utilized by any of the internal or on-chip processors, accelerators, controllers and/or engine. In one exemplary embodiment of the invention, any one or more of the RF modem accelerator 246a, 246b, ..., 246n, DSP subsystem 244, multimedia subsystem 242, MPEG accelerator 240, JPEG accelerator 234, graphics accelerator 236, external memory controller 226, and security engine/processor 224 may access the SRAM 228 by retrieving information therefrom and/or storing information thereto.

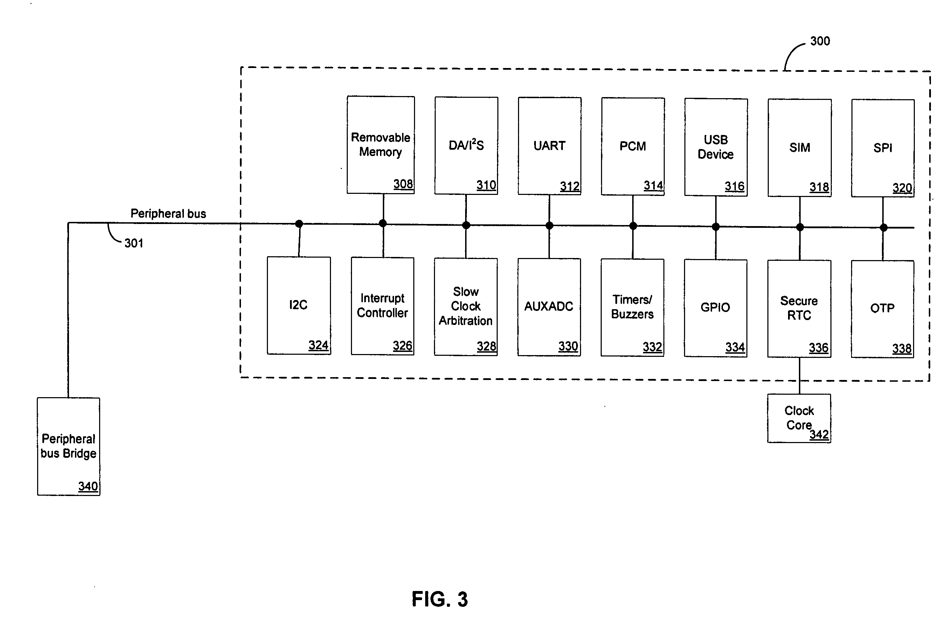

FIG. 3 is an exemplary block diagram of low speed peripherals, in accordance with an embodiment of the invention. Referring to FIG. 3, there is shown a low speed peripherals block 300, a peripheral bus bridge 340 and a clock core block 342. The low speed peripherals block 300 may comprise a peripheral bus 301, a removable memory block 308, an inter-integrated circuit sound (12S) block 310, a universal asynchronous receiver/transmitter (UART) block 312, a PCM block 314, a universal serial bus (USB) device 316, a system interface module (SIM) block 318, a serial peripheral interface (SPI) block 320, a GPRS cipher block 322, an inter integrated circuit (12C) block 324, an interrupt controller 326, an auxiliary analog to digital converter (AUXADC) block 330, a timers block 332, a general purpose input/output (GPIO) block 334, a secure real time clock (RTC) block 336, and a one-time password (OTP) block 338.

The removable memory block 308 may comprise suitable logic, circuitry and/or code that may enable storing of data. The baseband processors 102 and 104 may be enabled to interface with a plurality of low speed peripherals via serial interfaces, such as the an inter-integrated circuit sound (I²S) 310, a serial peripheral interface (SPI) 320, a universal asynchronous receiver/transmitter (UART) interface A 312 and UARTB 314 for Bluetooth or IrDA. The pulse code modulation (PCM) block 660 may comprise suitable logic, circuitry and/or code that may enable encoding of an analog voice signal into a digital bit stream. The I²C interface 324 may comprise suitable circuitry, logic, and/or code and may be adapted to control image sensors and may be a connected to smart batteries and other peripherals. The SPI interface 320 may comprise suitable circuitry, logic, and/or code and may be utilized to control image sensors. The SPI 320 may be utilized used to communicate synchronously over shorter distances. The SPI 320 may allow a microcontroller to communicate with peripheral devices, for example, a TTL shift register. A plurality of chip selects may be provided, for example, to work in a polled mode with interrupts or via an interrupt controller 326. Furthermore, the integrated chip 100 may comprise a plurality of general purpose I/O (GPIO) pins 334, which may be utilized for user defined I/O or to connect to the internal peripherals. The SIM block 318 may comprise suitable logic, circuitry and/or code that may enable handling of GSM, GPRS, and/or EDGE signals.

The slow clock arbitration block 328 may comprise suitable logic, circuitry and/or code that may enable timing arbitration between the plurality of low speed peripherals coupled to the peripheral bus 301. The AUXADC block 330 may comprise suitable logic, circuitry and/or code that may enable auxiliary conversion of analog signals to digital signals. The timer block 332 and the clock core 342 may comprise suitable logic, circuitry and/or code that may enable handling of the timing of the low speed peripherals coupled to the peripheral bus 301. The secure RTC block 336 may comprise suitable logic, circuitry and/or code that may enable secure storage of timing information. The OTP block 338 may comprise suitable logic, circuitry and/or code that may enable authentication and security of data transferred via the peripheral bus 301. The peripheral bus bridge 340 may comprise suitable logic, circuitry and/or code that may enable providing of an interface between the high-speed bus 130 domain and the low power peripheral bus 301 domain. The peripheral bus bridge 340 may appear as a slave on the high-speed bus 130 but may appear as a master on the peripheral bus 301. The read and write transfers on the high-speed bus 130 may be converted into corresponding transfers on the peripheral bus 301.

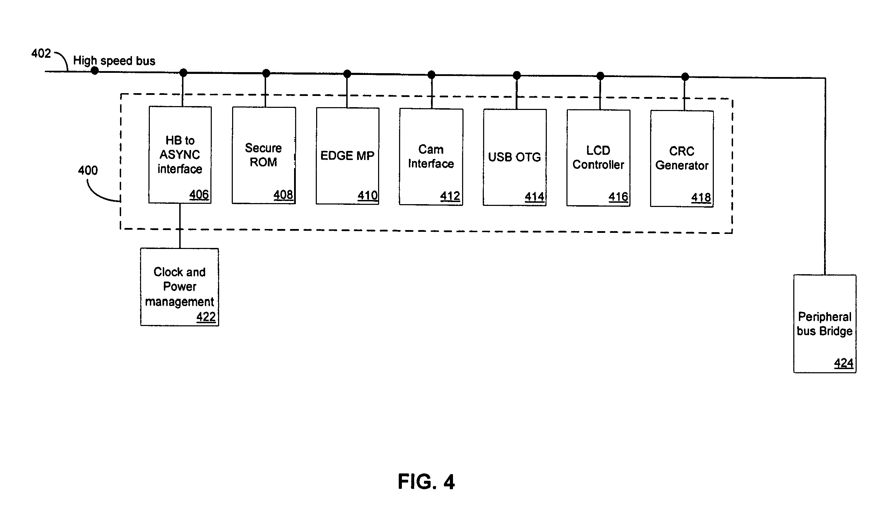

FIG. 4 is an exemplary block diagram of high-speed peripherals, in accordance with an embodiment of the invention. Referring to FIG. 4, there is shown a high-speed peripherals block 400, a high-speed bus 402, a clock and power management block 422 and a peripheral bus bridge 424. The high speed peripherals block 400 comprises a high speed to asynchronous interface block 406, a secure ROM 408, an EDGE multimedia processor (MP) 410, a camera interface 412, a USB on-the-go (OTG) block 414, a LCD controller 414, and a CRC generator 418.

The high speed to asynchronous interface block 406 interfacing of the high-speed bus 402 for asynchronous communication with the baseband processors 102 and 104. The clock and power management block 422 may comprise suitable logic, circuitry and/or code that may enable handling of the timing and power management of the high speed peripherals coupled to the high speed bus 402. The secure ROM 408 may comprise suitable logic, circuitry and/or code that may enable secure storage of data. The EDGE MP 410 may comprise suitable logic, circuitry and/or code that may enable EDGE processing of the received plurality of signals. The camera interface 412 may comprise suitable logic, circuitry and/or code that may enable windowing and sub-sampling functions, for example, to connect the baseband processors 102 and 104 to a mobile TV front end.

The LCD controller 416 may comprise suitable logic, circuitry and/or code that may enable receiving of data from the baseband processors 102 and 104 via a display controller and/or from a second external memory interface, for example. The CRC generator 418 comprise suitable logic, circuitry and/or code that may enable correction of errors within data transmitted by the baseband processors 102 and 104.

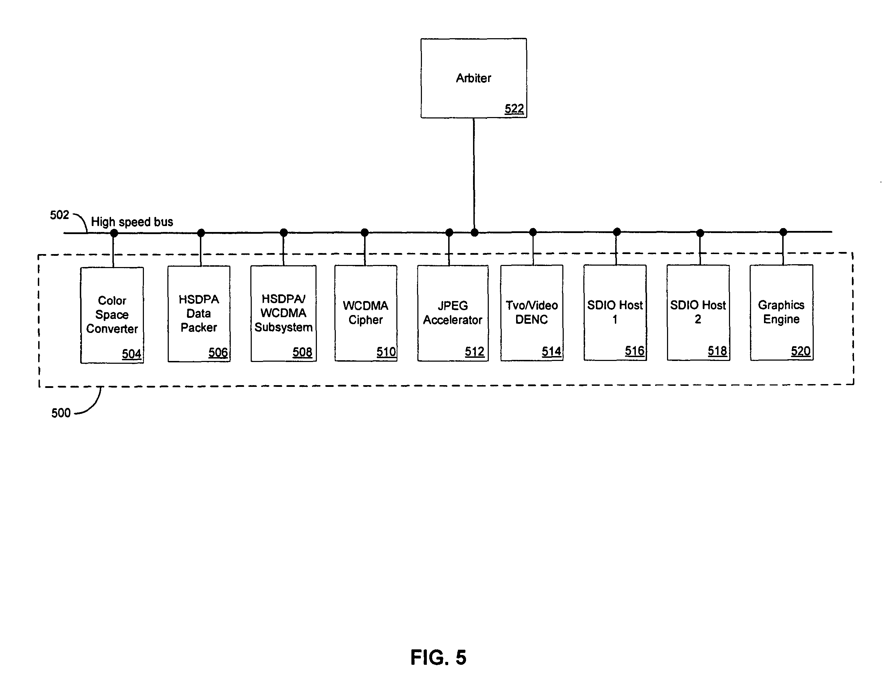

FIG. 5 is an exemplary block diagram of high-speed master peripherals, in accordance with an embodiment of the invention. Referring to FIG. 5, there is shown a high speed master peripherals block 500, an arbiter 522, and a high speed bus 502. The high speed master peripherals block 500 comprises a color space converter 504, a HSDPA data packer 506, a HSDPA/WCDMA subsystem 508, a WCDMA cipher 510, a JPEG accelerator 512, a digital video encoder (DENC) 514, a secure digital input/output (SDIO) host # 1 516, a SDIO host # 2 518, and a graphics engine 520.

The arbiter 522 may comprise suitable logic, circuitry and/or code that may enable bus arbitration among multiple masters in the high-speed master peripherals block 500 on the high-speed bus 502. A plurality of bus masters may reside on the high-speed bus 502. A pair of request and grant signals may be dedicated to each bus master, for example. The arbiter 522 may enable implementation of either a rotating priority or a programmable priority scheme. In a rotating priority scheme, the requestor that is most recently granted the high-speed bus 120 may receive the lowest priority, while the requestor position next to it may receive the highest priority. The remaining requestors may receive subsequently lower priorities based on their positions.

The color space converter 504 may comprise suitable logic, circuitry and/or code that may enable conversion from YUV color space to the RGB color space. United States Application Serial No. __________ (Attorney Docket No. 17050US01) filed on even date herewith, provides a detailed description of a method and system for performing YUV422 to YUV420 conversion, and is hereby incorporated by reference in its entirety. United States Application Serial No. __________ (Attorney Docket No. 17147US01) filed on even date herewith, provides a detailed description of a method and system for performing interleaved to planar transformation video operations, and is hereby incorporated by reference in its entirety.

The video DENC 514 may comprise suitable logic, circuitry and/or code that may enable combining a video signal with on-screen display information and feed the input to an analog TV, for example. The video DENC 514 may also be enabled to carry video data to drive a VCR via a RF modulator. The SDIO hosts, 516 and 518 comprise suitable logic, circuitry and/or code that may enable secure digital communication with a secure digital card or a multimedia card, for example. The graphics engine 520 may comprise suitable logic, circuitry and/or code that may enable graphics processing of data independent to the on-chip base band processors 102 and 104.

The HSDPA data packer 506 may comprise suitable logic, circuitry and/or code that may enable packing payload bits for HSDPA packets in sequence, in hardware, to form a packed data packet. United States Application Serial No. __________ (Attorney Docket No. 17268US01) filed on even date herewith, provides a detailed description of a method and system for a data packer unit for accelerating stack functions, and is hereby incorporated by reference in its entirety.

The HSDPA/WCDMA subsystem 508 may comprise suitable logic, circuitry and/or code that may enable mapping of at least a portion of a plurality of information bits in a received HSDPA bitstream to particular memory addresses without buffering a portion of the plurality of information bits during hybrid automatic request (HARQ) processing. United States Application Serial No. __________ (Attorney Docket No. 17266US01) filed on even date herewith, provides a detailed description of a method and system for a HSDPA bit-level processor engine, and is hereby incorporated by reference in its entirety. United States Application Serial No. __________ (Attorney Docket No. 17269US01) filed on even date herewith, provides a detailed description of a method and system for implementing a bufferless hybrid automatic request (HARQ) processor, and is hereby incorporated by reference in its entirety.

The WCDMA cipher 510 may comprise suitable logic, circuitry and/or code that may enable deciphering and/or bit stuffing, in hardware, of a potion of one of a plurality of data blocks starting at any bit location that is subsequent to a first bit of the one of the plurality of data blocks. United States Application Serial No. __________ (Attorney Docket No. 17267US01) filed on even date herewith, provides a detailed description of a method and system for ciphering interface with list processing, and is hereby incorporated by reference in its entirety.

The JPEG accelerator 512 may comprise suitable logic, circuitry and/or code that may enable pipeline processing of video data within a single chip, wherein the pipeline processing may further include decoding of a block of video data while simultaneously inverse transforming a previously decoded block of video data. United States Application Serial No. __________ (Attorney Docket No. 17262US01) filed on even date herewith, provides a detailed description of a method and system for pipelined processing in an integrated embedded image and video accelerator, and is hereby incorporated by reference in its entirety. United States Application Serial No. __________ (Attorney Docket No. 17263US01) filed on even date herewith, provides a detailed description of a method and system for programmable breakpoints in an integrated embedded image and video accelerator, and is hereby incorporated by reference in its entirety.

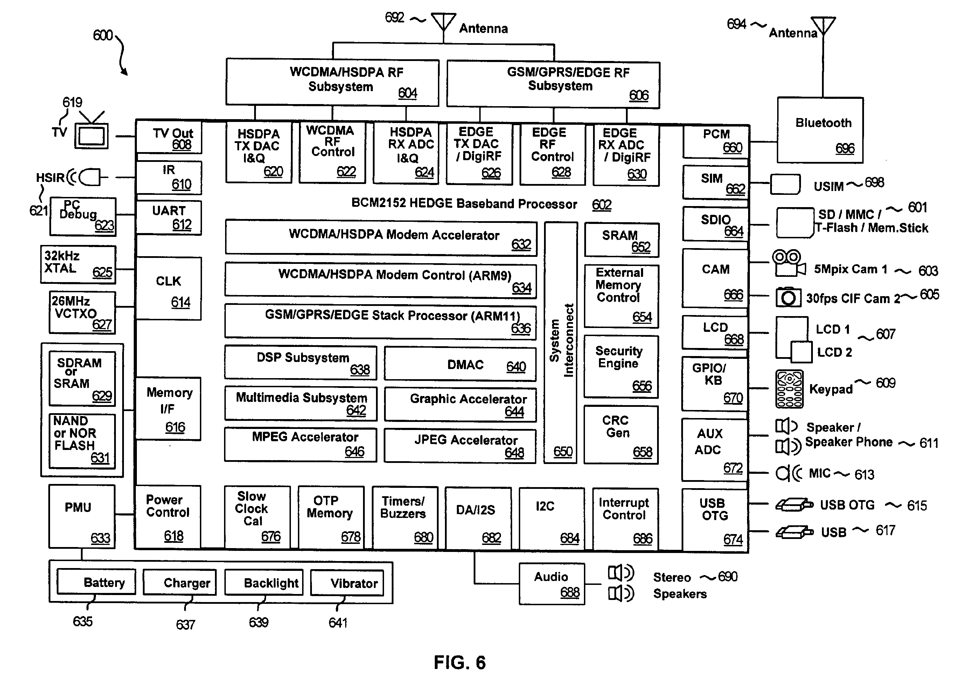

FIG. 6 is an exemplary block diagram that illustrates handling of a plurality of wireless protocols, in accordance with an embodiment of the invention. Referring to FIG. 6, there is shown a wireless system 600. The wireless system 600 comprises a baseband processor 602, a WCDMA/HSDPA RF subsystem 604, a GSM/GPRS/EDGE RF subsystem 606, a Bluetooth radio 696, a plurality of antennas 692 and 694, a TV 619, a high-speed infra-red (HSIR) 621, a PC debug block 623, a plurality of crystal oscillators 625 and 627, a SDRAM block 629, a NAND block 631, a power management unit 633, a battery 635, a charger 637, a backlight 639, and a vibrator 641. The wireless system 600 further comprises an audio block 688, a plurality of speakers 690, a plurality of USB devices 617 and 619, a microphone (MIC) 613, a speaker phone 611, a keypad 609, a plurality of LCD's 607, a plurality of cameras 603 and 605, a memory stick 601, and a UMTS subscriber identification module (USIM) 698.

The baseband processor 602 may comprise a TV out block 608, a infrared (IR) block 610, a UART 612, a clock (CLK) 614, a memory interface 616, a power control block 618, a slow clock block 676, a OTP memory block 678, a timers block 680, a 12S block 682, a 12C block 684, an interrupt control block 686. The baseband processor 602 may further comprise a USB on-the-go (OTG) block 674, a AUX ADC block 672, a GPIO block 670, a LCD block 668, a camera block 666, a SDIO block 664, a SIM interface 662, a PCM block 660, a EDGE receiver ADC block 630, a EDGE RF control block 628, a EDGE transmitter DAC block 626, a HSDPA receiver ADC block 624, a WCDMA RF control block 622, a HSDPA transmitter DAC block 620. The baseband processor 602 may comprise a SRAM block 652, an external memory control block 654, a security engine block 656, a CRC generator block 658, a system interconnect 650, a WCDMA/HSDPA modem accelerator 632, a WCDMA/HSDPA modem control block 634, a GSM/GPRS/EDGE stack processor block 636, a DSP subsystem 638, a DMAC block 640, a multimedia subsystem 642, a graphic accelerator 644, a MPEG accelerator 646, and a JPEG accelerator 648.

The baseband processor 602 may be enabled to interface with a plurality of low speed peripherals via serial interfaces, such as an inter-integrated circuit sound (I²S) 684, and a universal asynchronous receiver/transmitter (UART) interface 612 for Bluetooth or IrDA. The UART 612 may be coupled to the PC debug block 623. The I²S 682 may be coupled to the audio block 688. The audio block 688 may comprise suitable circuitry, logic, and/or code and may enable controlling of a plurality of speakers 690. The memory interface 616 may comprise suitable circuitry, logic, and/or code and may enable controlling the SDRAM block 629 and the NAND 631. The I²C interface 684 may comprise suitable circuitry, logic, and/or code and may enable controlling of image sensors and may be a connected to smart batteries and other peripherals. A plurality of general-purpose I/O (GPIO) pins 670, which may be utilized for user defined I/O or to connect to the internal peripherals, for example, a keypad 609. The SIM interface 662 may comprise suitable logic, circuitry and/or code that may enable handling of GSM, GPRS and/or EDGE signals and may be coupled to the USIM 698.

The slow clock block 676 may comprise suitable logic, circuitry and/or code that may enable timing arbitration between the plurality of low speed peripherals coupled to the peripheral bus 301. The AUXADC block 672 may comprise suitable logic, circuitry and/or code that may enable auxiliary conversion of analog signals to digital signals. The AUXADC block 672 may be coupled to the MIC 613 and the plurality of speakers 611. The timer block 680 and the clock block 614 may comprise suitable logic, circuitry and/or code that may enable handling of the timing of the low speed peripherals coupled to the peripheral bus 301. The clock block may be controlled by the plurality of crystal blocks 625 and 627. The OTP block 678 may comprise suitable logic, circuitry and/or code that may enable authentication and security of data transferred via the peripheral bus 301.

The TV out block may comprise suitable logic, circuitry and/or code that may enable controlling the TV 619. The IR block 610 may comprise suitable logic, circuitry and/or code that may enable controlling the HSIR 621. The power control block 618 may comprise suitable logic, circuitry and/or code that may enable handling of the timing and power management of the high speed peripherals coupled to the high speed bus 402. The power control block 618 may be coupled to the power management unit (PMU) 633. The PMU 633 may comprise suitable logic, circuitry and/or code that may enable the battery 635, the charger 637, the backlight 639, and the vibrator 641. The USB OTG block 674 may comprise suitable logic, circuitry and/or code that may enable accessing a plurality of USB devices 615 and 617,for example.

The camera interface 666 may comprise suitable logic, circuitry and/or code that may enable windowing and sub-sampling functions, for example, to connect the baseband processor 602 to a mobile TV front end or a plurality of cameras 603 and 605. The LCD controller 668 may comprise suitable logic, circuitry and/or code that may enable receiving of data from the baseband processor 602 via a display controller and/or from a second external memory interface, for example, and may be coupled to the plurality of LCD's 607. The SDIO block 664 may comprise suitable logic, circuitry and/or code that may enable secure digital communication with a secure digital card, a secure digital I/O card or a multimedia card, for example, a memory stick 601. The pulse code modulation (PCM) block 660 may comprise suitable logic, circuitry and/or code that may enable encoding of an analog voice signal into a digital bit stream and may be coupled to the Bluetooth radio 696. The Bluetooth radio 696 may be coupled to an antenna 694. The Bluetooth radio 696 may be integrated within a single chip.

The EDGE receiver (RX) ADC block 630 may comprise suitable logic, circuitry and/or code that may enable analog-to-digital conversion of signals at the receiver. The EDGE RF control block 628 may comprise suitable logic, circuitry and/or code that may enable processing of an EDGE RF signal. The EDGE RF control block 628 may perform, for example, filtering, amplification, and analog-to-digital (A/D) conversion operations. The EDGE transmitter DAC block 626 may comprise suitable logic, circuitry and/or code that may enable digital to analog conversion of signals at the transmitter.

The HSDPA receiver (RX) ADC block 624 may comprise suitable logic, circuitry and/or code that may enable analog to digital conversion of signals at the receiver. The WCDMA RF control block 622 may comprise suitable logic, circuitry and/or code that may enable processing of a WCDMA RF signal. In one embodiment of the invention, the WCDMA RF control block 622 may be utilized to control external RFIC interfaces such as the WCDMA RF subsystem 604 and the GSM/GPRS/EDGE RF subsystem 606. The WCDMA RF control block 622 may also be utilized for controlling, for example, filtering, amplification, and analog-to-digital (A/D) conversion operations. The HSDPA transmitter DAC block 620 may comprise suitable logic, circuitry and/or code that may enable digital-to-analog conversion of signals at the transmitter. The WCDMA/HSDPA RF subsystem 604 may comprise suitable logic, circuitry and/or code that may enable coupling of the HSDPA receiver ADC block 624, the WCDMA RF control block 622, and the HSDPA transmitter DAC block 620. The GSM/GPRS/EDGE RF subsystem 606 may comprise suitable logic, circuitry and/or code that may enable coupling of the EDGE receiver ADC block 630, the EDGE RF control block 628, and the EDGE transmitter DAC block 626. The WCDMA/HSDPA RF subsystem 604 and the GSM/GPRS/EDGE RF subsystem 606 may be coupled to the antenna 692.

The external memory control block 654 may comprise suitable logic, circuitry and/or code that may enable controlling of a scratch RAM and generation of signals that may be used to control the reading and writing of information from and to the SRAM 652 and the memory block 616. The security engine block 656 may comprise suitable logic, circuitry and/or code that may enable generation of random numbers for strengthening the security and confidentiality of electronic communications via the peripheral bus 301. The security engine block 656 may also enable public key encryption by securely exchanging keys that encrypt data.

The graphics accelerator 644 may comprise suitable logic, circuitry and/or code that may enable graphics processing of data independent to the on-chip base band processor 602. The CRC generator 658 may comprise suitable logic, circuitry and/or code that may enable correction of errors within data transmitted by the baseband processor 602. The JPEG accelerator 648 and the MPEG accelerator 646 may comprise suitable logic, circuitry and/or code that may enable pipeline processing of video data within a single chip, wherein the pipeline processing may further comprise decoding of a block of video data while simultaneously inverse transforming a previously decoded block of video data. United States Application Serial No. __________ (Attorney Docket No. 17262US01) filed on even date herewith, provides a detailed description of a method and system for pipelined processing in an integrated embedded image and video accelerator, and is hereby incorporated herein by reference in its entirety. United States Application Serial No. __________ (Attorney Docket No. 17263US01) filed on even date herewith, provides a detailed description of a method and system for programmable breakpoints in an integrated embedded image and video accelerator, and is hereby incorporated herein by reference in its entirety.

The DMAC 640 may comprise suitable logic, circuitry and/or code that may enable transferring of data between memory and peripheral devices. The DMAC 640 may enable accessing of the baseband processor 602 address and data buses. The DMAC 640 may enable suspending of the baseband processor 602 and transferring one byte by stealing a cycle, for example. The DMAC 640 may further enable suspension of the baseband processor 602 and transferring many bytes by burst transfer, for example.

The DSP subsystem 638 may comprise an expandable array of compute environments and high-speed I/O ports interconnected using a switched interconnect fabric. The multimedia processing block 642 may comprise suitable logic, circuitry and/or code that may enable compression and decompression of audio and video data streams. The multimedia processing block 642 may be enable reduction of the size of digital audio samples and video frames in order to speed up transmission and save storage space.

The WCDMA/HSDPA modem accelerator 632 may comprise suitable logic, circuitry and/or code that may enable acceleration of the conversion of WCDMA/HSDPA RF signals to baseband and communicate the baseband processed signals. The WCDMA/HSDPA modem control block 634 may be a baseband processor, ARM 9, for example. The WCDMA/HSDPA modem control block 634 may enable conversion of WCDMA/HSDPA RF signals to baseband and communicate the baseband processed signals to the plurality of peripherals via the system interconnect 650. The GSM/GPRS/EDGE stack processor 636 may be an ARM 11 processor, for example, or other suitable type of processor. The GSM/GPRS/EDGE stack processor 636 may enable conversion of GSM/GPRS/EDGE RF signals to baseband and communication of the baseband processed signals to the plurality of peripherals via the system interconnect 650.

The system interconnect 650 may comprise a cross bar switch, for example, that may enable coupling each of the baseband processors to a plurality of peripherals. For example, the system interconnect 650 may enable coupling of the high-speed master peripherals block 130 and the high-speed peripherals block 118 via the high-speed bus 130, and the low speed peripherals block 122 via the peripheral bus 132. The system interconnect 650 may also comprise a matrix switched interconnect. The system interconnect 650 may be programmed to configure any one of the plurality of on-chip baseband processors to process any one of the plurality of wireless access communication protocols.

In an embodiment of the invention, a method and system for processing signals in a communication system may comprise circuitry within a single chip, which enables processing of any one of a plurality of wireless access communication protocols, for example, WCDMA, HSDPA, GSM, GPRS, and EDGE by any one of a plurality of on-chip baseband processors, 102 and 104. In this regard, a plurality of processors are provided, each of which can be allocated dynamically to process any of a plurality of wireless access communication protocols such as GSM, EDGE, GPRS, WCDMA and HSDPA. This differs from conventional systems in that the instant invention does not have baseband processors that are dedicated to processing a particular wireless access communication protocol. Instead, the invention provides a method for processing any wireless access communication protocol by any on-chip baseband processor. The system comprises circuitry that enables configuring of any one of the plurality of on-chip baseband processors, 102 and 104 to process any one of the plurality of wireless access communication protocols.

The system comprises circuitry that enables coupling of any one of the plurality of on-chip baseband processors, 102 and 104 to process any one of the plurality of wireless access communication protocols via a system interconnect 114. The system comprises circuitry that enables accessing of a plurality of peripherals, for example, the high speed master peripherals 116, the high speed peripherals 118, and the low speed peripherals 122 by any one of the plurality of on-chip baseband processors, 102 and 104. The accessing is via at least a high-speed bus 130 communicatively coupled to any one of the plurality of on-chip baseband processors, 102 and 104. The accessing is via at least a peripheral bus 132 communicatively coupled to any one of the plurality of on-chip baseband processors, 102 and 104. The system comprises circuitry that enables arbitration of access to the plurality of peripherals, for example, the high-speed master peripherals 116 by any one of the plurality of on-chip baseband processors, 102 and 104 via an arbiter 112. The multimedia processing block 110 enables processing of multimedia data within the single chip. The multimedia data is received via one of the plurality of wireless access communication protocols.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for handling communication signals, the method comprising:
processing, within a single chip, any one of a plurality of wireless access communication protocols by any one of a plurality of on-chip baseband processors, wherein each of said plurality of on-chip baseband processors is not dedicated to process a particular one of said plurality of wireless access communication protocols.

2. The method according to claim 1, wherein said plurality of wireless access communication protocols comprise GSM, GPRS, EDGE, WCDMA and HSDPA.

3. The method according to claim 1, further comprising configuring said any one of said plurality of on-chip baseband processors to process said any one of said plurality of wireless access communication protocols.

4. The method according to claim 1, further comprising coupling said any one of said plurality of on-chip baseband processors to process said any one of said plurality of wireless access communication protocols.

5. The method according to claim 1, further comprising accessing any one of a plurality of peripherals by said any one of said plurality of on-chip baseband processors.

6. A machine-readable storage having stored thereon, a computer program having at least one code section for handling communication signals, the at least one code section being executable by a machine for causing the machine to perform steps comprising: processing, within a single chip, any one of a plurality of wireless access communication protocols by any one of a plurality of on-chip baseband processors, wherein each of said plurality of on-chip baseband processors is not dedicated to process a particular one of said plurality of wireless access communication protocols.

7. The machine-readable storage according to claim 6, wherein said plurality of wireless access communication protocols comprise GSM, EDGE, GPRS, WCDMA and HSDPA.

8. A system for handling communication signals, the system comprising:
within a single chip, circuitry that enables processing of any one of a plurality of wireless access communication protocols by any one of a plurality of on-chip baseband processors, wherein each of said plurality of on-chip baseband processors is not dedicated to process a particular one of said plurality of wireless access communication protocols.

9. The system according to claim 8, wherein said plurality of wireless access communication protocols comprise GSM, GPRS, EDGE, WCDMA and HSDPA.

10. The system according to claim 8, further comprising circuitry that enables configuring of said any one of said plurality of on-chip baseband processors to process said any one of said plurality of wireless access communication protocols.
